(19) Europäisches Patentamt
European Patent Office
Office européen des brevets

(11) Veröffentlichungsnummer: **0 175 907 B1**

# (12) EUROPÄISCHE PATENTSCHRIFT

(45) Veröffentlichungstag der Patentschrift: **13.03.91**

(51) Int. Cl.5: **C08L 63/00**, //C08L63:00, C08L75:06

(21) Anmeldenummer: **85110188.1**

(22) Anmeldetag: **14.08.85**

## (54) Verfahren zur Herstellung von Formkörpern.

(30) Priorität: **24.08.84 DE 3431193**

(43) Veröffentlichungstag der Anmeldung: **02.04.86 Patentblatt 86/14**

(45) Bekanntmachung des Hinweises auf die Patenterteilung: **13.03.91 Patentblatt 91/11**

(84) Benannte Vertragsstaaten: **AT CH DE FR GB IT LI**

(56) Entgegenhaltungen:
**FR-A- 1 476 418**
**US-A- 3 698 927**
**US-A- 4 000 214**

(73) Patentinhaber: **BAYER AG**

**W-5090 Leverkusen 1 Bayerwerk(DE)**

(72) Erfinder: **Wahle, Bernd, Dr.**
**Hasselstrasse 35a**
**W-4044 Kaarst 2(DE)**
Erfinder: **Uerdingen, Walter, Dr.**
**Humperdinckstrasse 41**
**W-5090 Leverkusen 1(DE)**
Erfinder: **Heine, Heinrich, Dipl.-Ing.**
**Müritzstrasse 38**
**W-5090 Leverkusen 1(DE)**
Erfinder: **Peltzer, Bernd, Dr.**
**Sebastian-Kneipp-Weg 15**
**W-4150 Krefeld 1(DE)**

EP 0 175 907 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Formkörpern auf der Basis von 1,2-Polyepoxiden, üblichen 1,2-Epoxidharzhärtern und Polyesterurethanen.

Aus der US-PS 4 000 214 ist es u.a. bekannt, Mischungen von 1,2-Polyepoxiden (80 bis 98 Gew.-%), Polyesterurethanen (2 bis 20 Gew.-%) und üblichen 1,2-Epoxidharzhärtern als Klebstoffe für Vinylpolymere zu verwenden. Das eingesetzte Polyesterurethan ist ein Reaktionsprodukt aus einem organischen Polyisocyanat und einem Hydroxylgruppen-enthaltenden Polyester aus einer Dicarbonsäure oder deren Anhydrid und einem mehrwertigen Alkohol mit mindestens 6 C-Atomen, wobei das Molverhältnis NCO zu OH etwa 1:1 ist. Wird ein mehrwertiger Alkohol mit weniger als 6 C-Atomen für die Polyesterherstellung eingesetzt, so geht die Klebewirkung der härtbaren Zusammensetzung aus 1,2-Polyepoxid, 1,2-Polyepoxidharzhärter und Polyesterurethan verloren.

Aufgabe der vorliegenden Erfindung ist es, die Härtungsprodukte aus üblichen 1,2-Polyepoxiden und 1,2-Polyepoxidharzhärtern so zu modifizieren, daß unter Erhalt der geschätzten Epoxidharz-Eigenschaften wie geringe Schrumpfung während des Härtens, Dimensionsstabilität und mechanische Stabilität nach dem Härten, ausgezeichnete dielektrische Eigenschaften, sehr gute Wärme-, Wasser- und Chemikalienbeständigkeit die Schlag- und Stoßfestigkeit sowie die Flexibilität gesteigert werden.

Die Aufgabe wurde dadurch gelöst, daß man als Modifizierungsmittel ausgewählte Polyesterurethane verwendet.

Gegenstand der Erfindung ist somit ein Verfahren zur Herstellung von Formkörpern auf Basis einer Mischung von 80 bis 95 Gew.-% mindestens eines 1,2-Polyepoxids und 5 bis 20 Gew.-% mindestens eines Polyesterurethans, mindestens eines 1,2-Epoxidharzhärters wie 0,6 bis 1,2 Anhydridäquivalente eines Polycarbonsäureanhydrids oder 0,6 bis 1,5 Aminäquivalente eines Polyamins oder eines Polyaminoamids sowie gegebenenfalls üblichen Zusatzstoffen und Aushärten der Reaktionsmischung, dadurch gekennzeichnet, daß als Polyesterurethan ein Umsetzungsprodukt von

(A) einem Polyester mit einer OH-Zahl von 25 bis 66, vorzugsweise 25 bis 55 mg KOH/g Substanz aus 1 Mol mindestens einer aliphatischen, gesättigten Dicarbonsäure mit 4 bis 6 C-Atomen, vorzugsweise Adipinsäure, und 2 bis 1,2 Mol mindestens eines Glykols mit 2 bis 5 C-Atomen, vorzugsweise Butandiol-1,4, Neopentylglykol oder deren Mischungen mit

(B) mindestens einem Polyisocyanat aus der Gruppe Toluylendiisocyanat, Diphenylmethandiisocyanat, Hexamethylen-1,6-diisocyanat und Isophorondiisocyanat und gegebenenfalls mit

(C) mindestens einem Kettenverlängerungsmittel aus der Gruppe der aliphatischen Diole des Molekulargewichtsbereichs von 62 bis 300, bevorzugt Butandiol-1,4, Hexandiol-1,6 oder deren Mischungen, eingesetzt wird.

Für das erfindungsgemäße Verfahren geeignete Dihydroxypolyester sind solche eines über 1.700, vorzugsweise zwischen 1.700 und 5.000, bevorzugt zwischen 2.000 und 5.000, liegenden, aus der OH-Zahl errechneten Molekulargewichts, wie sie in bekannter Weise aus Alkandicarbonsäuren mit 4 bis 6 C-Atomen und Alkandiolen mit 2 bis 6 C-Atomen, zugänglich sind (vgl. GB-PS 419 604; DE-AS 1 930 336, 1 256 822 und 2 149 836). Geeignete Dicarbonsäuren sind beispielsweise Bernsteinsäure oder Adipinsäure, vorzugsweise Adipinsäure.

Geeignete Alkandiole sind beispielsweise Ethylenglykol, Propandiol-1,2, Propandiol-1,3, Butandiol-1,4, Pentandiol-1,5, Neopentylglykol, vorzugsweise Butandiol-1,4 und Neopentylglykol

Als Polyisocyanate werden 1,6-Hexandiisocyanat, 1-Isocyanato-3-isocyanatomethyl-3,5,5-trimethylcyclohexan (Isophorondiisocyanat), 2,4- bzw. 2,6-Diisocyanatotoluol, 4,4'-Diphenylmethandiisocyanat bzw. Gemische derartiger Diisocyanate, bevorzugt 4,4'-Diphenylmethandiisocyanat, 2,4- oder 2,6 Diisocyanatotoluol bzw. deren Gemische eingesetzt.

Bei der Herstellung der Polyesterurethane werden oft die in der Polyurethanchemie an sich bekannten Kettenverlängerungsmittel mitverwendet, obwohl die Mitverwendung derartiger Kettenverlängerungsmittel nicht zwingend erforderlich ist (vergl. DE-AS 2 149 836). Bei diesen Kettenverlängerungsmitteln handelt es sich insbesondere um Diole oder Diolgemische des Molekulargewichtsbereiches 62 bis 300.

Geeignete derartige Diole sind Alkandiole mit 2 bis 8 C-Atomen wie Ethylenglykol, Propandiole, Butandiole, Pentandiole oder Hexandiole, vorzugsweise Butandiol-1,4; Hexandiol-1,6 oder deren Mischungen.

Die Kettenverlängerungsmittel werden im allgemeinen in solchen Mengen eingesetzt, daß auf jedes Mol des Dihydroxypolyesters bis zu 1, vorzugsweise 0,3 bis 0,7 Mol des Kettenverlängerungsmittels entfallen.

Die für das erfindungsgemäße Verfahren verwendeten Polyesterurethane können nach den in der Polyurethanchemie üblichen Methoden entweder bevorzugt im Eintopfverfahren, d.h. durch Umsetzung der Diisocyanat-Komponente mit einem Gemisch aller Verbindungen mit gegenüber Isocyanatgruppen rekationsfähigen Wasserstoffatomen hergestellt werden, wobei in der Schmelze bei 50 bis 200° C, vorzugsweise 80 bis 150° C in einem NCO/OH-Molverhältnis von 0,9:1 bis 0,999:1 gearbeitet wird, so daß endständige Hydroxylgruppen aufweisende Verfahrensprodukte entstehen; die Umsetzung kann selbstverständlich auch in Gegenwart von inerten Lösungsmitteln wie z.B. Toluol, Methylethylketon, Essigsäureethylester oder Dimethylformamid bzw. in Gegenwart von Gemischen derartiger Lösungsmittel durchgeführt werden (Methoden der Organischen Chemie, Houben-Weyl, 4. Auflage, 1963, Bd. XIV/2, Seiten 57-98).

Für das erfindungsgemäße Verfahren geeignete 1,2-Polyepoxide, wobei unter 1,2-Polyepoxiden solche Produkte verstanden werden, die mehr als eine 1,2-Epoxid-Gruppe pro Molekül enthalten, sind u.a. Polyglycidylether mehrwertiger Phenole, beispielsweise aus Brenzkatechin, Resorcin, Hydrochinon, aus 4,4'-Dihydroxydiphenylmethan, aus 4,4'-Dihydroxy-3,3'-dimethyldiphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromierungsprodukten der vorstehend genannten Diphenole, insbesondere aus Bisphenol A, aus Novolaken (d.h- aus Umsetzungsprodukten von ein- oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Oxicarbonsäure mit 1 Mol eines Dihalogenalkans oder Dihalogendialkylethers erhalten wurden (vgl. Britische Patentschrift 1 017 612), aus Polyphenolen, die durch Kondensation von Phenolen und langkettigen, mindestens 2 Halogenatome enthaltenden Halogenparaffinen erhalten wurden (vgl. Britische Patentschrift 1 024 288).

Außer den Epoxyharzen auf Basis eines mehrwertigen Phenols und einer Chlorepoxyverbindung können auch die epoxidierten Ringverbindungen gemäß US-Patentschrift 2 716 123 verwendet werden.

Weiter seien genannt Glycidylether mehrwertiger Alkohole, beispielsweise aus 1,4-Butandiol, 1,4-Butendiol, Glycerin, Trimethylolpropan, Pentaerythrit und Polyethylenglykolen.

Von weiterem Interesse sind Triglycidylisocyanurat, N, N'-Diepoxypropyloxamid, Polyglycidylthioether aus mehrwertigen Thiolen, wie beispielsweise aus Bismercaptomethylbenzol, Diglycidyl-trimethylentrisulfon, epoxidiertes Polybutadien, epoxidiertes Leinöl, Vinylcyclohexendiepoxid.

Weiterhin seien genannt: Polyepoxidverbindungen auf der Basis von aromatischen Aminen und Epichlorhydrin, z.B. N-Di-(2,3-epoxypropyl)-anilin, N,N'-Dimethyl-N,N'-diepoxypropyl-4,4'-diamino-diphenylmethan, N,N'-Tetraepoxypropyl-4,4'-diaminodiphenylmethan, N-Diepoxypropyl-4-amino-phenylglycidether (vgl, die Britischen Patentschriften 772 830 und 816 923).

Außerdem kommen infrage: Glycidylester mehrwertiger aromatischer, aliphatischer und cycloaliphatischer Carbonsäuren, beispielsweise Phthalsäurediglycidylester, Terephthalsäurediglycidylester, Tetrahydrophthalsäurediglycidylester, Adipinsäure-diglycidylester, Hexahydrophthalsäurediglycidylester, die gegebenenfalls durch Methylgruppen substituiert sein können und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxylgruppen, etwa Glycidylcarbonsäureester der allgemeinen Formel

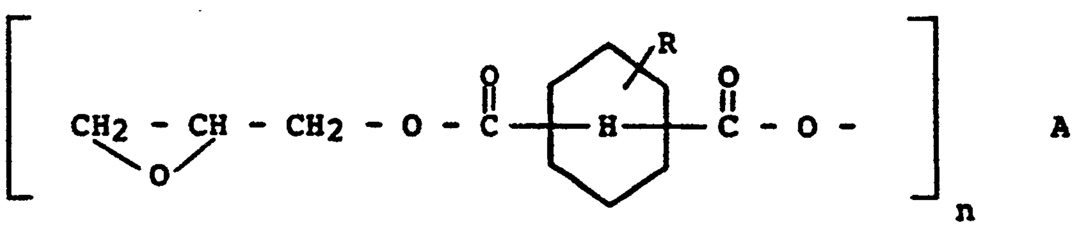

worin A einen mindestens 2-wertigen Rest eines gegebenenfalls durch Sauerstoff und/oder cycloaliphatische Ringe unterbrochenen, aliphatischen Kohlenwasserstoffs oder den 2-wertigen Rest eines cycloaliphatischen Kohlenwasserstoffs, R Wasserstoff oder Alkylreste mit 1 bis 3 C-Atomen und n eine Zahl zwischen 2 und 6 bedeuten oder Mischungen von Glycidylcarbonsäureestern der angegebenen allgemeinen Formel (vgl. Britische Patentschrift 1 220 702).

Bevorzugt sind Polyglycidylether mehrwertiger Phenole, insbesondere Polyepoxide auf Basis des Bisphenol A mit einem Epoxidäquivalent von 170 bis 500. Unter Epoxidäquivalent wird die Gramm-Menge an 1,2-Epoxidverbindung verstanden, in der eine 1,2-Epoxidgruppe enthalten ist. Für das erfindungsgemäße Verfahren geeignete 1,2-Polyepoxidharzhärter sind alle üblichen 1,2-Polyepoxidharzhärter wie Polycarbonsäureanhydride, Polyamine, Polyaminoamide usw.

Unter üblichen Polycarbonsäureanhydriden werden aromatische, aliphatische und cycloaliphatische Polycarbonsäureanhydride oder deren Mischungen verstanden.

Als Beispiele seien genannt: Phtahlsäureanhydrid, Tetrahydrophthalsäureanhydrid, Hexachlorendomethylen-tetrahydrophthalsäureanhydrid, Endomethylen-tetrahydrophthalsäureanhydrid, Methyl-endomethylentetrahydrophthalsäureanhydrid, Hexahydrophthalsäureanhydrid, Methylhexahydrophthalsäureanhydrid, Bernsteinsäureanhydrid, Maleinsäureanhydrid, Dodecenylbernsteinsäureanhydrid, vorzugsweise flüssige bzw. niedrigschmelzende (F<60° C), cycloaliphatische Dicarbonsäureanhydride. Besonders bevorzugt werden Hexahydrophthalsäureanhydrid und cis-3- und/oder 4-Methylhexahydrophthalsäureanhydrid.

Pro Epoxidäquivalent werden 0,6 bis 1,2, vorzugsweise 0,9 bis 1,1 Anhydridäquivalente des Polycarbonsäureanhydrids eingesetzt.

Als Beschleuniger für die Härtung können die üblicherweise verwendeten in Mengen von 0,1 bis 1,5 Gew.-%, bezogen auf Diepoxid-Härter/Mischung, eingesetzt werden. Bevorzugt werden tertiäre Amine, beispielsweise Dimethylbenzylamin.

Den härtbaren Mischungen aus Diepoxid, Polyesterurethan, Epoxidharzhärter und gegebenenfalls Beschleunigern können vor der Härtung übliche Zusatzstoffe wie Füllstoffe, Farbstoffe, Pigmente, flammhemmende Stoffe, Formtrennmittel und/oder verstärkende Materialien in üblichen Mengen zugesetzt werden. Füllstoffe sind beispielsweise Quarzmehl, Aluminiumoxid, Aluminiumoxidhydrat, Calciumcarbonat, Calcium-Magnesium-Carbonat. Verstärkende Materialien sind beispielsweise Fasern, Fäden, Vliese, Gewebe aus Glas, Polyester, Nylon, Polyacrylnitril, Seide, Baumwolle, Kohlenstoffasern usw. Die Zusatzstoffe können auch dem Polyepoxid oder dem Polyesterurethan zugesetzt und anschließend mit den übrigen Komponenten vermischt werden.

Geeignete Amine sind beispielsweise Hexamethylendiamin, Polyetherdiamine von Polyalkylenglykolethern, deren Hydroxylgruppen durch primäre Aminogruppen ersetzt sind, Diethylentriamin, Triethylentetramin, Tetraethylenpentamin, Pentaethylenhexamin, Dimethylaminopropylamin, Aminoethylethanolamin, Methandiamin, N-Aminoethylpiperazin, Diaminocyclohexan, 4,4'-Diamino-3,3'-dimethyldicyclohexylmethan, Isophorondiamin, m-Xylylendiamin, Tetrachlor-p-xylylendiamin, m-Phenylendiamin, 4,4'-Diaminodiphenylmethan, 4,4'-Diaminodiphenylsulfon, 4-Methyl-3,5-diaminobenzoesäureisopropylester, 3,3'-Diethoxycarbonyl-4,4'-diamino-diphenylmethan, 2,6-Diaminopyridin, Substitutionsprodukte der erwähnten Verbindungen sowie Abmischungen zweier oder mehrerer Amine.

Geeignete Polyaminoamide sind die üblichen Kondensationsprodukte aus Dicarbonsäuren und Diaminen.

Vorzugsweise werden bei Raumtemperatur (20 bis 25° C) flüssige aliphatische, aromatische oder cycloaliphatische Polyamine oder deren Mischungen verwendet. Besonders bevorzugt sind Alkandiol-bis-(3-aminopropyl)-ether, mit 2 bis 6 C-Atomen in der Alkangruppe (vgl. DE-PS 1 102 391), insbesondere Butandiol-1,4-bis(3-aminopropyl)ether, die in Kombination mit Bisphenol A Diglycidylether und den erfindungsgemäß einzusetzenden Polyesterurethanen nach Härtung bei Raumtemperatur Formkörper mit außerordentlich hoher Kerbschlagzähigkeit liefern.

Pro Epoxidäquivalent können 0,6 bis 1,5, vorzugsweise 0,8 bis 1,3 Aminäquivalente (= NH-Äquivalente) zur Härtung eingesetzt werden.

Unter Säureanhydridäquivalent wird die Menge Anhydrid in Gramm verstanden, die eine Anhydridgruppe enthält. Das Aminäquivalentgewicht ist diejenige Menge Amin in Gramm, in der ein Grammatom an Aminstickstoff gebundenen Wasserstoff enthalten ist.

Die 1,2-Polyepoxide, insbesondere feste 1,2-Polyepoxide, können zur Viskositätserniedrigung auch mit flüssigen Monoepoxiden wie Phenylglycidylether, tert.-Butylphenylglycidylether, Allylglycidylether u. a. abgemischt werden.

Das erfindungsgemäße Verfahren wird im allgemeinen so durchgeführt, daß aus dem 1,2-Polyepoxid und dem Polyesteruretahn bei Raumtemperatur oder bei erhöhter Temperatur, d.h. bei ca. 20 bis 120° C, eine Lösung hergestellt wird und daß anschließend, gegebenenfalls nach Abkühlen auf Raumtemperatur, der 1,2-Polyepoxidharz-Härter, gegebenenfalls in Kombination mit einem Beschleuniger, darin aufgelöst wird.

Die nach dem erfindungsgemäßen Verfahren erhaltenen Formkörper zeichnen sich aus durch hervorragende mechanische Eigenschaften bei einer völlig klebfreien Oberfläche. Das bei der Härtung unverträglich gewordene Polyesterurethan bildet eine eigene Phase in der Epoxidharz-Matrix, in ungefüllten Systemen erkennbar an einer starken Trübung.

Im Vergleich zu nicht erfindungsgemäß hergestellten Formkörpern konnten die Schlagzähigkeit und die Reißdehnung um bis zu mehr als 100 % gesteigert werden, ohne dabei einen Abfall in der Wärmeformbeständigkeit zu erhalten.

Überraschenderweise zeigen die erfindungsgemäß hergestellten Formkörper eine bis weit in den Bereich der Thermoplasten hineinreichende Kerbschlagzähigkeit (ungefüllter Zustand) sowie im gefüllten Zustand eine in einem speziellen Test ermittelte Rißbeständigkeit, die den Stand der Technik übertrifft.

Unter Formkörpern werden in der vorliegenden Anmeldung auch geformte Gebilde verstanden, die sich aus Preßmassen, Schichtstoffpreßmassen und glasfaserverstärkten Laminaten herstellen lassen. Solche Formkörper sind beispielsweise mechanische und elektrische Konstruktionselemente.

Die in den Beispielen angegebenen Teile und Prozente beziehen sich auf das Gewicht, soweit nicht anders vermerkt.

Herstellung der Ausgangsmaterialien:

1. Herstellung der Polyester

Die in Tabelle 1 als Polyester angegebenen Ausgangsmaterialien werden aus Adipinsäure und den angegebenen Glykolen durch Schmelzkondensation bei Temperaturen bis 220 °C unter Abdestillieren des gebildeten Wassers, zuletzt im Vakuum, bis zur angegebenen OH-Zahl verestert.

Tabelle 1 Polyester

| Polyester | Säure | Alkohol | OH-Zahl mg KOH/g Substanz |
|---|---|---|---|
| 1 | Adipinsäure | Ethylenglykol, Diethylenglykol } 1:1 | 37,6 |
| 2 | " | Ethylenglykol | 65,9 |
| 3 | " | Ethylenglykol, Diethylenglykol } 1:1 | 50,9 |
| 4 | " | Butandiol-1,4 | 52,8 |
| 5 | " | Butandiol-1,4 | 43,1 |
| 6 | " | Butandiol-1,4, Hexandiol-1,6 } 1:1 | 57,4 |
| 10 | " | Propylenglykol-1,3 | 55,9 |
| 11 | " | Hexandiol-1,6, Neopentylglykol } 1:1 | 53,3 |

2. Herstellung der Polyesterurethane

Die in Tabelle 2 als Ausgangsprodukte einzusetzenden Polyesterurethane werden aus den angegebenen Polyestern, Diisocyanaten und gegebenenfalls Glykolen als Kettenverlängerer im angegebenen Molverhältnis Diisocyanat zu Dihydroxykomponenten nach 10 Stunden bei 140 °C erhalten (vgl. DE-AS 1 930 336 und 1 256 822).

Tabelle 2 Polyesterurethane

| Polyester-urethan | Nr. des Polyesters aus Tabelle 1 | Diisocyanat | Kettenverlängerer | Molverhältnis NCO/OH |
|---|---|---|---|---|
| I | 1 | TDI[x] | - | 0,980 |
| II | 2 | TDI | - | 0,980 |
| III | 3 | TDI | - | 0,980 |
| IV | 4 | TDI | - | 0,980 |
| V | 5 | MDI[xx] | Butandiol-1,4 | 0,980 |
| VI | 6 | TDI | - | 0,980 |
| VII | 7 | TDI | - | 0,980 |
| VIII | 8 | MDI | Butandiol-1,4 | 0,980 |
| IX | 9 | MDI | Butandiol-1,4 / Hexandiol-1,6 1:1 | 0,980 |
| X | 10 | MDI | Butandiol-1,4 | 0,950 |
| XI | 11 | MDI | Butandiol-1,4 | 0,999 |
| XII | 11 | MDI | - | 0,925 |
| XIII | 11 | MDI | - | 0,950 |
| XIV | 11 | MDI | - | 0,975 |
| XV | 12 | HDI[xxx] | - | 0,975 |

[x] TDI = Toluylendiisocyanat-Gemisch; 65 % Toluylen-2,4-diisocyanat, 35 % Toluylen-2,6-diisocyanat

[xx] MDI = 4,4'-Diphenyl-methan-diisocyanat

[xxx] HDI = Hexamethylen-diisocyanat

Herstellung der Formkörper:

1. Herstellung säureanhydrid-gehärteter Formkörper:

Die Herstellung der Formkörper erfolgt nach der folgenden allgemeinen Vorschrift:

100 Teile eines 1,2-Polyepoxid-Harzes auf der Basis von Bisphenol A/Epichlorhydrin mit einem Epoxid-Äquivalentgewicht von 190 werden unter Stickstoff bei 120° C mit den angegebenen Mengen des jeweiligen Polyesterurethans aus Tabelle 2 versetzt. Nach vollständiger Auflösung läßt man auf 60° C abkühlen, gibt 70 Teile Hexahydrophthalsäureanhydrid und 1 Teil Dimethylbenzylamin als Härtungsbeschleuniger zu,

evakuiert bis zu völligen Blasenfreiheit bei 3 mbar und vergießt zu 4 mm starken Platten. Diese werden 3 Stunden bei 80 °C angehärtet und 15 Stunden bei 100 °C ausgehärtet.

Aus diesen Platten werden die zu Messung der mechanischen Eigenschaften erforderlichen Normstäbe geschnitten.

Gemessen werden: Wärmeformbeständigkeit nach Martens gemäß DIN 53 458, Schlagzähigkeit gemäß DIN 53 453 und Reißdehnung gemäß DIN 53 455.

**Tabelle 3** Formkörper

| Formkörper | Polyesterurethan Nr aus Tabelle 2 | Teile | Wärmeformbeständigkeit nach Martens DIN 53 458 [°C] | Schlagzähigkeit DIN 53 453 [kJ/m²] | Reißdehnung DIN 53 455 [%] |
|---|---|---|---|---|---|
| A | I | 10 | 102 | 31,1 | 5,7 |
| B | II | 15 | 100 | 25,4 | 5,9 |
| C | III | 15 | 102 | 28,5 | 5,3 |
| D | IV | 5 | 102 | 26,3 | 5,1 |
| E | VI | 5 | 102 | 27,8 | 5,9 |
| F | VI | 10 | 103 | 35,1 | 5,2 |
| G | V | 5 | 104 | 27,9 | 5,5 |
| H | V | 10 | 103 | 33,8 | 5,0 |
| J | VII | 5 | 103 | 27,9 | 5,1 |
| K | VII | 10 | 107 | 29,3 | 4,4 |
| L | IX | 5 | 105 | 27,1 | 5,8 |
| M | IX | 10 | 101 | 29,5 | 5,7 |
| N | X | 15 | 100 | 29,9 | 5,1 |
| O | XI | 5 | 101 | 25,2 | 5,0 |
| P | XI | 10 | 105 | 32,4 | 4,9 |
| Q | XII | 10 | 102 | 29,2 | 5,9 |
| R | XIII | 10 | 101 | 27,8 | 4,5 |
| S | XIV | 10 | 102 | 28,0 | 4,8 |

Üblicherweise setzt man 1,2-Epoxidharz-Härter Gemischen zur Verbesserung der mechanischen Werte der ausgehärteten Formkörpern vor der Härtung handelsübliche Schlagzähmodifikatoren zu (vgl. Druckschrift der Fa. B.F. Goodrich Company, Cleveland, Ohio, USA: "Toughen Epoxy-Resins with HYCAR R -RLP ["Schlagzäh-Modifizierung von Epoxid-Harzen mit HYCAR R -Reaktiven-Flüssig-Polymeren], R = Warenzeichen der B.F. Goodrich Company).

Diese Schlagzähmodifikatoren sind Copolymerisate auf Basis Butadien-Acrylnitril mit funktionellen Carboxylendgruppen und Molgewichten von ca. 3.500 und werden unter den Bezeichnungen HYCAR CTBN vertrieben. In den nachfolgenden Vergleichsbeispielen sind Werte für Wärmeformbeständigkeit, Schlagzähigkeit und Reißdehnung für Prüfkörper angegeben, die sich von den Formkörpern A bis S gemäß Erfindung nur dadurch unterscheiden, daß sie anstelle des Polyesterurethans HYCAR CTBN enthalten.

Tabelle 3a (Vergleiche)

| Vergleichs-formkörper | HYCAR Typ | CTBN Teile | Wärmeformbeständigkeit DIN 53 458 /°C/ | Schlagzähigkeit DIN 53 453 /kJ/m²/ | Reißdehnung DIN 53 455 /%/ |
|---|---|---|---|---|---|
| G' | 1300X8 | 5 | 98 | 21 | 3,6 |
| H' | 1300X8 | 10 | 95 | 27,8 | 5,6 |
| F' | X1300X9 | 10 | 97 | 31,6 | 4,2 |
| X | - | - | 104 | 16,8 | 2,7 |

Aus Tabelle 3a ist ersichtlich, daß gegenüber Formkörpern ohne Schlagzähmodifikator (= Vergleichsformkörper X) durch HYCAR CTBN Zusatz eine bemerkenswerte Steigerung der Schlazähigkeits- und Reißdehnungswerte erreicht wird, gleichzeitig aber die Wärmeformbeständigkeit nachteilig um 6 bis 9° C herabgesetzt wird.

Vergleicht man die Werte der Prüfkörper G', H' und F' der Tabelle 3a mit den Werte G, H und F der Tabelle 3, die als Schlagzähmodifikator erfindungsgemäß einzusetzende Polyesterurethane enthalten, so fällt ins Auge, daß die Wärmeformbeständigkeit praktisch unverändert bleibt, gleichzeitig aber die Schlagzähigkeitswerte deutlich erhöht sind (bis zu 33 %).

2. Herstellung gefüllter Formkörper:

100 Teile eines 1,2-Polyepoxid-Harzes auf Basis von Bisphenol A/Epichlorhydrin mit einem Epoxidäquivalent von 190 werden unter Stickstoff bei 120° C mit den angegebenen Mengen des jeweiligen Polyesterurethans aus Tabelle 2 versetzt. Nach vollständiger Auflösung läßt man auf 60° C abkühlen, gibt 1 Teil Dimethylbenzylamin (Beschleuniger), 280 Teile Quarzmehl (16900 Maschen ) und 70 Teile Hexahydrophthalsäureanhydrid hinzu, entgast bei 3 mbar und vergießt zu 4 mm dicken Platten für die Bestimmung der Biegefestigkeit gemäß DIN 53 452 und der Schlagzähigkeit gemäß DIN 53 453 sowie zu den weiter unten beschriebenen Prüfkörpern für die Bestimmung der Rißbeständigkeit. Die Platten bzw. Prüfkörper werden 2 Stunden bei 80° C und 15 Stunden bei 120° C gehärtet. Aus den Platten werden zur Messung der Biegefestigkeit nach DIN 53 452 und Schlagzähigkeit nach DIN 53 453 Normstäbe geschnitten.

Zur Bestimmung der Rißbeständigkeit wird die Mischung in 20 Metallwännchen mit einem Durchmesser von 55 mm bis zu einer Höhe von 15 mm gegossen, in den Metallwännchen befindet sich jeweils ein zuvor eingelegter Stahlfederring nach DIN 127, Größe A 24, oberflächenglanzverzinkt, chromatisiert. Nach der Härtung, wie oben beschrieben, werden zwanzig Prüfkörper mit dem eingegossenen Stahlfederring einem zyklischen Temperaturwechsel zwischen +100° C und -50° C solcherart unterworfen, daß man einen Raumtemperatur aufweisenden Prüfkörper eine Stunde bei 100° C lagert, ihn wieder auf Raumtemperatur abkühlen läßt, (Abkühlzeit: 1 Stunde), dann eine Stunde bei -50° C lagert, ihn wieder auf Raumtemperatur erwärmen läßt (Erwärmungszeit: 1 Stunde) und den Zyklus erneut beginnt (maximal 10 Zyklen).

Es wird beobachtet, ob und gegebenenfalls nach welcher Anzahl von Zyklen, Risse im Gießharz auftreten. Nach zehn Zyklen wird einmal als vorrangiges Kriterium die Anzahl der unzerstört gebliebenen Prüfkörper, das heißt der Prüfkörper ohne Rißbildung, festgestellt. Weiter wird von jedem durch Rißbildung aus dem Test genommenen Prüfkörper festgehalten, nach welcher Anzahl von Zyklen Rißbildung erfolgte. Die Summe der Anzahl der ohne Rißbildung überstandenen Zyklen der Prüfkörper mit Rißbildung ergibt die Bewertungszahl. Beispielsweise könnte im Falle des gefüllten Formkörpers Pf (Tabelle 4) die maximale Bewertungszahl von 9 (Anzahl der Zyklen) ./. 13 (Anzahl der Prüfkörper mit Rißbildung) erreicht werden, wenn alle restlichen 13 Prüfkörper stets 9 Zyklen überstehen.

**Tabelle 4**

| Formkörper gefüllt | Polyesterurethan Nr. aus Tabelle 2 | Teile | Biegefestigkeit [N/mm²] DIN 53 452 | Schlagzähigkeit [kJ/m²] DIN 53 453 | Rißbeständigkeit * Bewertungszahl [Punkte] | Rißbeständigkeit * unzerstörte Prüfkörper [Anzahl] |
|---|---|---|---|---|---|---|
| Gf | V | 10 | 115 | 12,2 | 47 | 0 |
| Mf | IX | 10 | 113 | 13,1 | 94 | 3 |
| Pf | XI | 10 | 105 | 12,2 | 104 | 7 |
| **Vergleiche mit HYCAR CTBN** | | | | | | |
| G'f | 1300X8 | 10 | 78 | 9,7 | 0 | 0 |
| M'f | X1300X9 | 10 | 106 | 12,3 | 0 | 0 |
| Xf | ohne | - | 93 | 11,4 | 3 | 0 |

* gemessen an 20 Prüfkörpern (s. Text)

Aus Tabelle 4 ist ersichtlich, daß die gefüllte Formkörper bezüglich Biegefestigkeit und Schlagzähigkeit auf etwa dem Niveau des nicht modifizierten Formkörpers (Xf) liegen, und unabhängig vom Schlagzähmodifikator Polyesterurethan oder HYCAR CTBN sind. Bei Vergleich der Rißbeständigkeit zeigt sich jedoch, daß mit HYCAR CTBN modifizierte Formmassen nicht zum Umhüllen von Materialien geeignet sind, die einen anderen Wärmeausdehnungskoeffizienten besitzen als die HYCAR modifizierten Formmassen. Im Gegensatz dazu sind die den erfindungsgemäßen Formkörpern zugrundeliegenden Formmassen zum Umhüllen

und Einkapseln von Materialien mit anderen Wärmeausdehnungskoeffizieten z.B. von Metallkernen, Metallspulen und Metalldrähten ausgezeichnet geeignet.

3. Herstellung amin-gehärteter Formkörper:

100 Teile eines 1,2-Polyepoxid-Harzes auf Basis Bisphenol A/Epichlorhydrin mit einem Epoxidäquivalent von 190 werden unter Stickstoff bei 120 °C mit der angegebenen Menge des jeweiligen Polyesterurethans aus Tabelle 2 versetzt. Nach vollständiger Auflösung läßt man auf Raumtemperatur abkühlen, versetzt mit der angegebenen Menge Aminhärter, vergießt zu 4 mm dicken Blatten und härtet 24 Stunden bei Raumtemperatur. Die aus diesen Platten erhältlichen Normstäbe dienen zur Bestimmung der Schlagzähigkeit und der Kerbschlagzähigkeit gemäß DIN 53 453 sowie der Wärmeformbeständigkeit nach Martens gemäß DIN 53 458.

**Tabelle 5**

| Formkörper | Polyesterurethan Nr. aus Tabelle 2 | Teile | Härter Art | Teile | Schlagzähigkeit DIN 53453 /kJ/m²/ | Kerbschlagzähigkeit DIN 53453 /kJ/m²/ | Wärmeformbeständigkeit u. Martens DIN 53 458 /°C/ |
|---|---|---|---|---|---|---|---|
| U | XI | 10 | dto. | 35 | 133 [1] | 17,4 | 50 |
| Vergleichsbeispiele | | | | | | | |
| V | ohne | | dto. | 35 | 83 [2] | 2,4 | 59 |
| U' | XI | 10 | Versamid R 250 | 50 | 32 | 1,3 | 50 |
| V' | ohne | | dto. | 50 | 20 | 1,2 | 50 |
| U" | XI | 10 | Laromin R C 260 | 30 | 34 | 1,7 | 65 |
| V" | ohne | | dto. | 30 | 26 | 1,4 | 48 |

Versamid R 250: Warenzeichen der Schering AG (Polyaminoamid)

Laromin R C 260: Warenzeichen der BASF (Cycloaliphatisches Diamin)

1 7 von 10 Prüfkörpern nicht gebrochen

2 alle 10 Prüfkörper gebrochen.

Beim Einsatz von 10% des Polyesterurethans (Formkörper U), erhält man ganz hervorragende Werte sowohl für die Schlagzähigkeit als auch für die Kerbschlagzähigkeit und verbessert dadurch den Stand der Technik (Formkörper V) um 60 % bezüglich der Schlagzähigkeit (da beim Test 7 von 10 Prüfkörpern nicht gebrochen sind, gegenüber Formkörper V, bei dem alle Prüfkörper gebrochen sind) und um 725 % bezüglich der Kerbschlagzähigkeit.

Dieses sehr überraschende Ergebnis konnte beispielsweise bei den in den Vergleichsbeispielen eingesetzten Aminhärtern Versamid 250 und Laromin C 260 nicht beobachtet werden:

Die Werte für die Schlagzähigkeiten liegen ohne Zusatz eines Polyesterurethans (Formkörper V' und V") deutlich niedriger als die mit dem erfindungsgemäß eingesetzten Härter Butandiol-1,4-bis-(3-aminopropyl)-ether (Formkörper V) und lassen sich durch Zusatz eines Polyesterurethans nur unbedeutend steigern (Formkörper U' und U").

## Ansprüche

1. Formkörper auf Basis einer ausgehärteten Mischung von 80 bis 95 Gew.-% mindestens eines 1,2-Polyepoxids und 5 bis 20 Gew.-% mindestens eines Polyesterurethans, mindestens eines 1,2-Epoxidharzhärters wie 0,6 bis 1,2 Anhydridäquivalente eines Polycarbonsäureanhydrids oder 0,6 bis 1,5 Aminäquivalente eines Polyamins oder eines Polyaminoamids, sowie gegebenenfalls üblichen Zusatzstoffen, dadurch gekennzeichnet, daß als Polyesterurethan ein Umsetzungsprodukt aus
(A) einem Polyester mit einer OH-Zahl von 25 bis 66 mg KOH/g Substanz aus 1 Mol mindestens einer aliphatischen, gesättigten Dicarbonsäure mit 4 bis 6 C-Atomen und 2 bis 1,2 Mol mindestens eines Glykols mit 2 bis 5 C-Atomen oder deren Mischungen,
(B) mindestens einem Polyisocyanat aus der Gruppe Toluylendiisocyanat, Diphenylmethandiisocyanat, Hexamethylen-1,6-diisocyanat und Isophorondiisocyanat und gegebenenfalls
(C) mindestens einem Kettenverlängerungsmittel aus der Gruppe der aliphatischen Diole des Molekulargewichtsbereichs von 62 bis 300 oder deren Mischungen, eingesetzt wird.

## Claims

1. Moulded articles based on a hardened mixture of 80 to 95% by weight of at least one 1,2-polyepoxide and 5 to 20% by weight of at least one polyesterurethane, at least one 1,2-epoxide resin hardener such as 0.6 to 1.2 anhydride equivalents of a polycarboxylic acid anhydride or 0.6 to 1.5 amine equivalents of a polyamine or of a polyaminoamide, and optionally conventional additives, characterised in that the polyesterurethane used is a reaction product of
(A) a polyester having an OH number of from 25 to 66 mg KOH/g of substance of 1 mol of at least one aliphatic, saturated dicarboxylic acid having 4 to 6 carbon atoms and 2 to 1.2 mol of at least one glycol having 2 to 5 carbon atoms, or mixtures thereof,
(B) at least one polyisocyanate from the group comprising tolylene diisocyanate, diphenylmethane diisocyanate, hexamethylene-1,6-diisocyanate and isophorone diisocyanate and optionally
(C) at least one chain lengthening agent from the group comprising aliphatic diols in the molecular weight range of from 62 to 300, or mixtures thereof.

## Revendications

1. Objets moulés à base d'un mélange durci de 80 à 95% en poids d'au moins un 1,2-polyépoxyde et 5 à 20% en poids d'au moins un polyester-uréthanne, au moins un durcisseur des résines 1,2-époxydiques, par exemple 0,6 à 1,2 équivalents d'anhydride d'un anhydride d'acide polycarboxylique ou 0,6 à 1,5 équivalents d'amine d'une polyamine ou d'un polyaminoamide, et le cas échéant des additifs usuels, caractérisés en ce que l'on a utilisé en tant que polyester-uréthanne un produit de réaction de :
(A) un polyester d'indice de OH 25 à 66 mg de KOH/g de substance, formé à partir de 1 mol d'au moins un acide dicarboxylique aliphatique saturé en $C_4$-$C_6$ et de 2 à 1,2 mol d'au moins un glycol en $C_2C_5$ ou leurs mélanges;
(B) au moins un polyisocyanate du groupe formé par le toluylène-diisocyanate, le diphénylméthane-diisocyanate, l'hexaméthylène-1,6-diisocyanate et l'isophorone-diisocyanate et le cas échéant,
(C) au moins un agent d'allongement des chaînes du groupe des diols aliphatiques de poids moléculaire 62 à 300 ou leurs mélanges.